# EUROPEAN PATENT SPECIFICATION

(11) **EP 1 947 887 B1**
(45) Date of publication and mention of the grant of the patent: **15.07.2009**
(21) Application number: 07290083.0
(22) Date of filing: 19.01.2007
(51) Int. Cl.: H04W 52/04

(54) **A transport format resource combination (TFRC) selection method**
Procédé de sélection d'un fomat TFRC
Verfahren zur Auswahl eines TFRC Formats

(43) Date of publication of application: 23.07.2008
(73) Proprietor: Alcatel Lucent, 75008 Paris (FR)
(72) Inventor: Braun, Volker, 70178 Stuttgart (DE); Hoek, Cornelis, 71732 Tamm (DE); Van Lier, Jan, 70825 Korntal-Münchingen (DE)
(74) Representative: Schmidt, Werner Karl

(56) References cited:
- WO-A-20/05125125
- GB-A- 2 401 760
- US-A1- 2005 070 319
- FORKEL ET AL: "High Speed Downlink Packet Access (HSDPA)-Enhanced Data Rates for UMTS Evolution" 19 October 2005 (2005-10-19), COMPUTER NETWORKS, ELSEVIER SCIENCE PUBLISHERS B.V., AMSTERDAM, NL, PAGE(S) 325-340 , XP005030062 ISSN: 1389-1286 * page 326, right-hand column, line 13 - page 331, left-hand column, line 2 *

## Description

### Field of the invention

The invention relates to a method of selecting transport format resource combinations for usage during a transmission time interval in a transmission channel used for downlink communication between a base station and mobile terminals, to a computer program product adapted to perform the method in accordance with the invention, to a telecommunications network, and to a base station of a telecommunications network.

### Background and related art

Packets can be transmitted according to the HSDPA (high-speed downlink packet access) protocol implemented in a 3GPP (third generation partnership project) wideband code division multiple access (WCDMA) mobile telecommunications network.

High-speed downlink packet access is a concept within WCDMA specifications whose main target is to increase user peak data rates and quality of service and to generally improve spectral efficiency for downlink asymmetrical and bursty packet data services. HSDPA has a short transmission time interval (TTI), adaptive modulation and coding (AMC), multi code transmission, fast physical layer (L1) hybrid automatic repeat request (HARQ) and uses a packet scheduler in a node-B or base station where it has easy access to air interface measurements. HSDPA makes use of this by adjusting the user data rate to match the instantaneous radio channel conditions. While connected, an HSDPA user equipment, which is also referred to in the following as mobile terminal, sends periodically a channel quality indicator (CQI) to the node-B or base transceiver station indicating what data rate the mobile terminal can support under its current radio conditions. The mobile terminal further sends an acknowledgement for each packet so that the node-B knows when to initiate retransmissions. With channel quality measurements available for each user equipment in the cell, the packet scheduler may optimize its scheduling amongst its users and thus divide the available capacity between them according to the running services and requirements.

Reference is made to interdigital, 'turbo-coding and puncturing interactions on HS-DSCH (high-speed downlink shared channel) in R5 HSDPA', 3GPP document R1-030444. As mentioned, HSDPA supports link adaptation by means of AMC. The number of physical channels which are also referred to in the following as channelisation codes or multi codes, and the modulation scheme will determine the available transmission capacity on the physical medium, and the transport block size (TBS) will give the source data rate.

The document US 2006/0067229 A1 describes a method for determining a transport block size for use in a data transmission. The method comprises the step of determining a desired code rate for transmission of data and the step of adjusting a transport block size if the desired code rate is associated with a reduced performance.

The document US 2005/0070319 A1 discloses a method of controlling link adaptation in a packet radio system. The method comprises receiving a CQI report which includes the number of parallel multi codes, the transport block size, and the modulation scheme to be used in link adaptation. The method according to the above mentioned document further comprises the step of calculating an effective code rate, ECR, based on the received CQI report. The method comprises calculating new estimates for the effective code rate and the transport block size based on a ratio of the number of multi codes of the CQI report and the number of multi codes that the packet radio system has available for transmission, and executing link adaptation based on the new estimates for the effective code rate and the transport block size.

The document disclosed in the Korean patent abstracts under publication number 10 2005 0063281 describes a method for selecting a transport format to optimize a data transmission in a code division multiple access modal communication system.

The document GB 2401760 discloses a transport format selection method. According to the method described therein, a transport format is selected by the MAC layer in a universal mobile transmission standard (UMTS) by first selecting a transport block size to be used in each transport channel in the next transport time interval, based on the MAC logical priority (MLP) and protocol data unit (PDU) size of the data carried by those logical channels which are to be mapped to the transport channel. An algorithm selects the block size which allows transmission of the maximum amount of highest priority data. The number of transport blocks to be included in each transport block set defining a transport format is then determined by selecting the transport format which allows transmission of a maximum number of PDU's. The entire transport format combination is then selected by checking which of these transport formats are valid.

It is an object of the invention to provide an improved method of selecting a transport format for usage during a transmission time interval in a transmission channel. It is a further object of the invention to provide a computer program product which is adapted to perform the improved method, to provide an improved telecommunications network, and an improved base station.

### Summary of the invention

According to a first aspect of the invention, there is provided a method of selecting transport format resource combinations (TFRCs) for usage during a transmission time interval (TTI) in a transmission channel, wherein the transmission channel is used for downlink communication between a base station and mobile terminals.

In accordance with an embodiment of the invention, the method comprises the step of determining a first set of TFRCs from a given TFRC table for a first mobile terminal served by the base station. Each TFRC of the set of TFRCs specifies the same transport block size (TBS), a specific number of channelisation codes and a specific transmission power for the downlink communication with the first mobile terminal. The method further comprises the step of selecting for the downlink communication with the first mobile terminal during the TTI a first TFRC from the first set of TFRCs such that a product of the left-over number of channelisation codes and the left-over transmission power is maximal. The left-over number of channelisation codes is determined by the difference between the number of channelisation codes available for the first mobile terminal in the TTI and the number of the channelisation codes specified by the first TFRC. The left-over transmission power is thereby determined by the difference between the transmission power available for the downlink communication with the first mobile terminal in the TTI and the transmission power specified by the first TFRC.

The left-over number of channelisation codes and left-over transmission power are available to the base station for communication with at least a second mobile terminal during the TTI. The selection of the first TFRCs is based on the maximization of the product between the left-over number of channelisation codes and left-over transmission power. The method in accordance with the invention is particularly advantageous as the first TFRC is selected such that a minimum amount of resources is employed for the communication with the first mobile terminal and such that a nearly optimum amount of resources remains available for communication with further mobile terminals.

In accordance with an embodiment of the invention, the method further comprises the step of determining a second set of TFRCs from the TFRC table for a second mobile terminal. Each TFRC of the second set of TFRCs specifies the same transport block size (TBS), a specific number of channelisation codes and a specific transmission power for the downlink communication with the second mobile terminal. Furthermore, a second TFRC is selected for the downlink communication with the second mobile terminal in the TTI from the second set of TFRCs such that the product of the left-over number of channelisation codes and the left-over transmission power is maximal. The left-over number of channelisation codes is determined by the difference between the number of channelisation codes available for the second mobile terminal in the TTI and the number of the channelisation codes specified by the second TFRC. The left-over transmission power is determined by the difference between the transmission power available for the second mobile terminal in the TTI and the transmission power specified by the second TFRC. The selection of the second TFRC is based on a maximization of the left-over number of channelisation codes and transmission power. Hence, a nearly optimum amount of resources will remain available for the scheduling of further mobile terminals.

In accordance with an embodiment of the invention, the method further comprises the step of determining if the transmission channel is to be shared between at least the first and second mobile terminal and the step of selecting for the first mobile terminal the TFRC from the first set of TFRCs which specifies the lowest transmission power, if the transmission channel is only to be scheduled for the first mobile terminal. If only the first mobile terminal can use or uses the transmission channel during the corresponding TTI, then it is particularly advantageous to select the first TFRC with the lowest transmission power in order to reduce interferences occurring in the cell associated with the base station, in particular in the regions of the cell where the cell overlaps with neighboring cells.

In accordance with an embodiment of the invention, a left-over transmission power takes into account a transmission power of a control channel of a mobile terminal for which the TFRC is selected subsequent to a determination of the product by use of the left-over transmission power, and wherein the control channel is associated with the transmission channel. Thus, the left-over transmission power employed for the determination of the second TFRC takes account of the transmission power of the control channel for the first mobile terminal.

In accordance with an embodiment of the invention, the transmission channel is only to be scheduled for the first mobile terminal, if the first mobile terminal is the only mobile terminal served in a cell by the base station, or if the first mobile terminal served in the cell by the base station is the only mobile terminal with non-zero buffer filling, or if the determined first set of TFRCs provides only sufficient radio resources to serve the first mobile terminal during the TTI. The detection whether only a single mobile terminal or two or more mobile terminals can be scheduled per TTI can thus be based on the above mentioned criteria.

In accordance with an embodiment of the invention, the first set of TFRCs is determined from the table of TFRCs such that the TFRCs of the first set of TFRCs specifies a TBS which is the largest possible TBS for the first mobile terminal, and wherein the second set of TFRCs is determined from the table of TFRCs such that the TFRCs of the second set of TFRCs specifies a TBS which is the largest possible TBS for the second mobile terminal. The table of TFRCs defines all possible TFRCs that can be used by the base station for serving the mobile terminals via the transmission channel. The entries of the TFRCs are matched to the RLC PDU size in use, e.g. a table can be used for 320 bit RLC PDU size and another table for 640 bit RLC PDU size. Each TFRC of the TFRC table specifies a TBS, a number of channelisation codes, a modulation scheme, a reference power, and the minimum HARQ buffer size required to allow transmission of the corresponding TFRC. A set of TFRCs, also referred to as TBS group, comprises all TFRCs in the TFRC table which specify the same TBS. Thus, the TFRCs in the set of TFRCs differ in the number of channelisation codes, modulation scheme, reference power, and minimum required HARQ buffer size.

Given the radio resources which can be provided by the base station, the general channel quality and the capabilities of the first mobile terminal, the first set of TFRCs is selected from the table of TFRCs such that the TBS specified by the TFRCs in the set of TFRCs is the maximum possible TBS. In the selection of the maximum possible TBS, a power scaling is applied, meaning that the power required to transmit a TFRC is given by the reference power corrected by a CQI dependent power offset, e.g., a 1 dB power decrease with a one-step CQI increase, and possibly other power offsets. Further, if the total buffer filling can be transmitted with a single TFRC, the smallest TBS which is larger or equal to the total buffer filling is selected. Similarly, the second set of TFRCs is determined for the second mobile terminal by taking the remaining radio resources of the base station, the general channel quality and the capabilities of the second mobile terminal into account.

In accordance with an embodiment of the invention, the transmission channel and the control channel are in accordance with the high speed downlink packet access protocol. In particular, the transmission channel is a high-speed downlink shared channel (HS-DSCH) and the control channel is a high-speed shared control channel (HS-SCCH).

In a second aspect, there is provided a computer program product which comprises computer executable instructions. The instructions are adapted to perform steps of the above described method.

In accordance with an embodiment of the invention, the computer program product is an extension of a scheduler which is employed in the base station for the selecting of the transport format resource combinations for usage during a transmission time interval in a transmission channel.

In a third aspect, the invention relates to a telecommunications network. The network has a base station supporting a downlink transmission channel for downlink communication with mobile terminals. The telecommunications network further comprises a base station supporting a downlink transmission channel for downlink communication with a first mobile terminal. The network has further means for determining per transmission time interval of the transmission channel a first set of TFRCs using a given TFRC table. Each TFRC of the first set of TFRCs specifies the same transport block size (TBS), a specific number of channelisation codes, and a specific transmission power. The network provides also means for selecting a first TFRC from the first set of TFRCs for the downlink communication with a first mobile terminal in the TTI such that a product of the left-over number of channelisation codes and the left-over transmission power is maximal. The left-over number of channelisation codes is determinable by the difference between the number of channelisation codes available for the first mobile terminal in the TTI and the number of the channelisation codes specified by the first TFRC. The left-over transmission power is determinable by the difference between the transmission power available for the downlink communication with the first mobile terminal in the TTI and the transmission power specified by the first TFRC.

In accordance with an embodiment of the invention, the network is an UMTS network adapted to support the high-speed downlink packet access protocol.

In accordance with an embodiment of the invention, the base station is a node-B in accordance with the UMTS standard.

In a fourth aspect, the invention relates to a base station.

### Brief description of the drawings

In the following preferred embodiments of the invention will be described in greater detail by way of example only making reference to the drawings in which:
- Figure 1: shows a simplified block diagram of an UMTS network,
- Figure 2: shows a flow diagram illustrating steps performed by the method in accordance with the invention,
- Figure 3: shows an illustration of the allocation of channelisation codes by mobile terminals for several TTIs, and
- Figure 4: shows a TFRC table.

### Detailed description

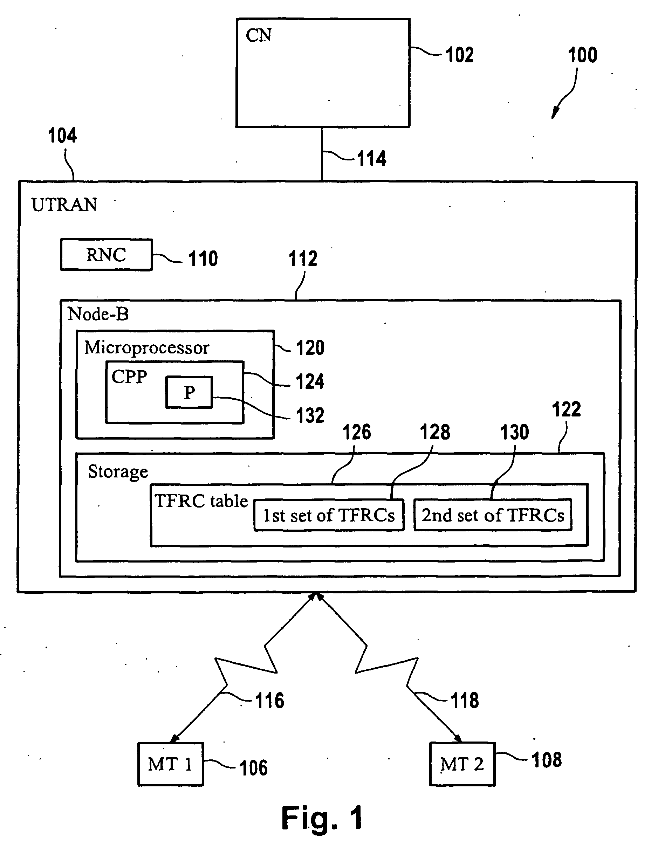

Fig. 1 shows a simplified block diagram of an UMTS network 100. The main parts of the UMTS network 100 are a core network (CN) 102, an UTRAN 104, and first and second terminals 106 and 108. With reference to the UMTS standard, the mobile terminals are often called user equipments (UEs). The term user equipment is used as a synonym for mobile terminal within this document. UTRAN 104 is an acronym for UMTS terrestrial radio access network and the UTRAN 104 is thus the access network of UMTS.

The main elements of the UTRAN 104 are a radio network controller (RNC) 110 and a node-B 112. The UTRAN 104 is connected with the core network 102 via an interface 114 called lu. The interface 114 is supported by the RNC 110 which manages the node-B 112 (besides other node-Bs) through an lub interface.

The first and second mobile terminals 106 and 108 are connected to the UTRAN 104 via interfaces 116 and 118, the so called Uu interfaces, and are served via the interfaces 116 and 118, respectively, by the node-B 112 and the RNC 110.

From the mobile terminal point of view, the RNC 110 is the serving RNC which terminates the mobile terminals' link layer communications. From the core network 102 point of view, the RNC 110 terminates the lu for the mobile terminals.

The HSDPA concept has been introduced to increase packet data throughput in the downlink transmission from the node-B 112 to the mobile terminals 106 and 108, respectively, by means of fast physical layer transmission and transmission combination as well as fast link adaptation controlled by the node-B 112. In HSDPA, the link adaptation decisions are performed in the node-B 112. The HS-DPCCH (high-speed dedicated physical control channel) is used in HSDPA for providing feedback information from the mobile terminals 106 and 108 to the node-B 112. The HS-DPCCH carries the necessary control information in the uplink, that is, ARQ acknowledgements (both positive and negative) and downlink quality feedback information. Thus, the HS-DPCCH channel may carry H-ARQ information and channel quality indicator (CQI) information bits. The HS-DPCCH channel mapping and coding of these information parts are described in the third generation partnership project, technical specification group radio access network; multiplexing and channel coding (FDD) (Release 5) 3 GPP TS 25.212 v 5.3.0 (2002-12).

The mobile terminals 106 and 108 send a CQI report regularly over a control channel to the node-B 112. The CQI report includes the number of channelisation codes, the transport block size and the modulation scheme to be used in calculating link adaptation estimates and also information on the relative energy per symbol to noise ratio and an effective code rate.

Based on the reported channel qualities and on the capabilities of the mobile terminal 106 and 108, the node-B 112 can select a transport format resource combination for each transmission time interval of the HS-DSCH which is used for downlink transmission of data to the first and second mobile terminals 106 and 108. The node-B 112 comprises a microprocessor 120 and a storage device 122. The microprocessor 120 executes a computer program product 124 which comprises computer executable instructions that are adapted to perform the selection of the TFRC for the first and second mobile terminal (and further mobile terminals not taken into account if fig. 1). The computer program product 124 is permanently stored on the storage device 122 and loaded into the microprocessor 120, e.g., when the node-B 112 is started up.

In operation, the computer program product 124 determines according to an embodiment of the invention in a first step, if the first and second mobile terminals 106 and 108 share the HS-DSCH during the corresponding time interval or not. The determination can be based on the following criteria. If there is only the first mobile terminal 106 in the cell served by the node-B 112, then it is evident that the mobile terminal 106 can use the HS-DSCH during the TTI for itself. Similarly, the first mobile terminal 106 can use the HS-DSCH for itself, if the first mobile terminal 106 is the only mobile terminal that has a non-zero buffer filling. Further, it might well be that the TBS of the selected set of TFRCs allows only to schedule the first mobile terminal 106 as the radio resources are insufficient to schedule additionally a second mobile terminal 108.

In the following, it is assumed that the first and second mobile terminals 106 and 108 share the HS-DSCH during the corresponding time interval. The computer program product 124 determines then a first TFRC for the first mobile terminal 106 and subsequently a second TFRC for the second mobile terminal 108.

In order to determine the first TFRC, the computer program product 124 determines a first set of TFRCs 128 from a given TFRC table 126 which is stored on the storage device 122 and which comprises the first and a second set of TFRCs 128 and 130. Each TFRC of a set of TFRCs specifies at least a number of channelisation codes and a particular transmission power as well as a TBS. A set of TFRCs is characterized in that all TFRCs of a set of TFRCs specify the identical TBS.

Given the radio resources (maximum number of channelisation codes, maximum transmission power, etc) the node-B 112 is able to provide, the channel quality and capabilities of the first mobile terminal 106, the computer program product 124 selects the first set of TFRCs 128 from the TFRC table 126 which provides the maximum possible TBS for the first mobile terminal 106.

The first TFRC is then selected from the first set of TFRCs for the downlink communication with the first mobile terminal 106 in the TTI such that a product 132 of the left-over number of channelisation codes and the left-over transmission power is maximal. The left-over number of channelisation codes is given by the difference between the number of channelisation codes available for the first mobile terminal in the TTI and the number of the channelisation codes specified by the first TFRC. The left-over transmission power is given by the difference between the transmission power available for the downlink communication with the first mobile terminal 106 in the TTI and the transmission power specified by the first TFRC.

In order to determine the second TFRC for the second mobile terminal 108, the computer program product 124 determines a second set of TFRCs from the TFRC table 124. In the following, it is assumed that the computer program product 124 selects the second set of TFRCs 130 from the TFRC table 126 as it provides the maximum possible TBS for the mobile terminal 108, given the radio resources (maximum number of channelisation codes, maximum transmission power, etc) the node-B 112 is able to provide, the channel quality and capabilities of the second mobile terminal 108. Then, the second TFRC is selected for the second mobile terminal 108 from the second set of TFRCs 130 such that the product 132 of the left-over number of channelisation codes and the left-over transmission power reaches a maximum. The left-over number of channelisation codes is given by the difference between the number of channelisation codes available for the second mobile terminal 108 (the difference takes into account the channelisation codes of the first TFRC scheduled for the first mobile terminal 106) in the TTI and the number of channelisation codes specified by the second TFRC. The left-over transmission power is determined by the difference between the transmission power available for the second mobile terminal 108 (taking into account the transmission power scheduled for the first mobile terminal 106 as specified by the first TFRC and optionally a power scaling) in the TTI and the transmission power specified by the second TFRC.

If only the first terminal 106 employs the HS-DSCH during the corresponding time interval, then the first TFRC might be selected from the first set of TFRCs as described above or in a way that the selected TFRC provides the lowest possible transmission power in order to minimize interferences with other signals.

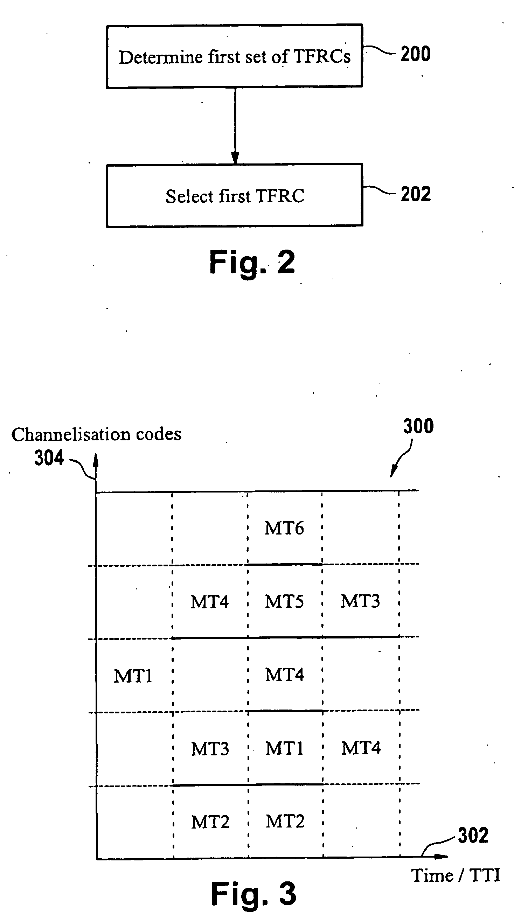

Fig. 2 shows a flow diagram illustrating steps performed by the method of selecting transport format resource combinations for usage during a transmission time interval in a transmission channel. The transmission channel is used for downlink communication between a base station and mobile terminals. In step 200, a first set of TFRCs is determined from a given TFRC table. Each TFRC of the set of TFRCs specifies the same transport block size (TBS), a specific number of channelisation codes and a specific transmission power for the downlink communication with the first mobile terminal. In step 202, a first TFRC is selected from the first set of TFRCs for the downlink communication with a first mobile terminal in the TTI such that a product of the left-over number of channelisation codes and the left-over transmission power is maximal. The left-over number of channelisation codes is given by the difference between the number of channelisation codes available for the first mobile terminal in the TTI and the number of the channelisation codes specified by the first TFRC. The left-over transmission power is determined by the difference between the transmission power available for the downlink communication with the first mobile terminal in the TTI and the transmission power specified by the first TFRC.

Fig. 3 shows an illustration of the allocation of channelisation codes of the HS-DSCH by mobile terminals for several transmission time intervals. The abscissa 302 of the graph 300 represents the time axis and is divided into four subsequent transmission time intervals. The ordinate 304 of the graph 300 represents the number of channelisation codes of the HS-DSCH which can be scheduled for each TTI to one or more mobile terminals.

In the example shown here, in total five channelisation codes are available for HS-DSCH transmission. During the first transmission time interval, all five channelisation codes are scheduled for mobile terminal 1. Hence, according to an embodiment of the invention, the TFRC which specifies the lowest transmission power will be determined from the selected set of TFRCs. The reason is that the lower the transmission power, the lower are interference effects with other signals. Interferences with other signals occur especially in the border regions of the cell in which the mobile terminal resides as there might be overlaps with adjacent cells.

In the second time interval, mobile terminal 2, mobile terminal 3 and mobile terminal 4 share the five channelisation codes, wherein the mobile terminal 2 uses one channelisation code, wherein the mobile terminal 3 uses two channelisation codes, and wherein the mobile terminal 4 uses also two channelisation codes. The scheduling of the TFRCs to the mobile terminals providing the corresponding channelisation codes to the mobile terminal 2, mobile terminal 3, and mobile terminal 4 is done in the following way.

At first, a first TFRC is selected from a selected first set of TFRCs for the mobile terminal 2 such that the product between the left-over transmission power (transmission power which can be provided by the base station minus transmission power needed for the corresponding first TFRC) and the left-over number of channelisation codes is maximal. The first TFRC provides one channelisation code for the mobile terminal 2, the left-over number of channelisation codes is thus 4 (5-1).

Similarly, a second TFRC is selected for the mobile terminal 3 from a selected second set of TFRCs. The second set of TFRCs is selected with respect to the capabilities of the mobile terminal 3, the channel quality, and the radio resources of the base station such that the second set of TFRCs provides TFRCs with the largest possible TBS. The second TFRC is then chosen from the second set of TFRC such that the product of the left-over number of channelisation codes (5-1-2) and the left-over transmission power (transmission power provided by the base station minus transmission power used according to the first TFRC assigned to the mobile terminal 2 minus transmission power assigned to the mobile terminal 3 according to the corresponding second TFRC) reaches a maximum. This has the advantage that there will be sufficient radio resources available in order to schedule the mobile terminal 4. The selection of a third TFRC for the mobile terminal 4 from the available sets of TFRCs will be done as described previously for the mobile terminal 2 and 3.

Correspondingly, the mobile terminals 1, 2 and 4 to 6 share the five channelisation codes during the third time transmission interval, wherein the corresponding TFRCs are assigned to the mobile terminals subsequently as described for the three mobile terminals in the preceding paragraph. In the fourth time interval, only mobile terminal 4 and mobile terminal 3 share the five channelisation codes, whereby the corresponding TFRCs providing the three or two channelisation codes scheduled for the mobile terminal 4 and mobile terminal 3, respectively, are determined as described above.

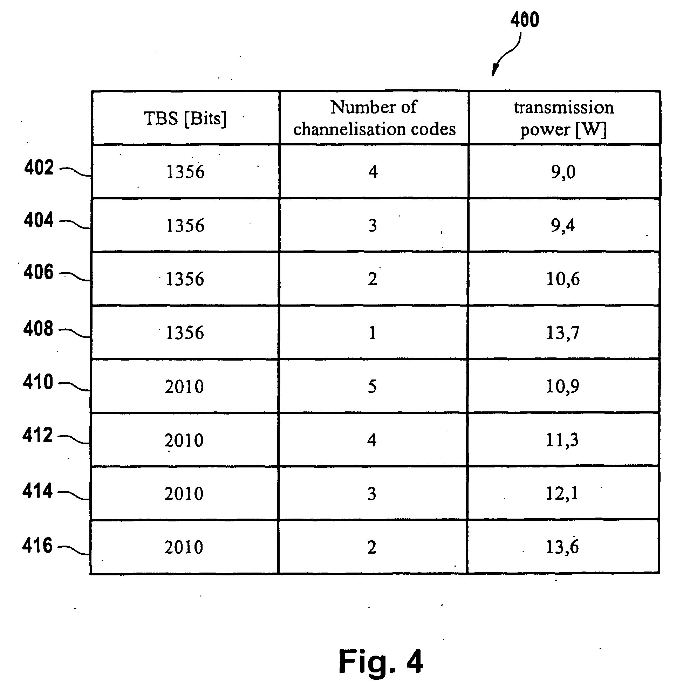

Fig. 4 shows a TFRC table 400. The TFRC table 400 comprises a list of TFRCs 402,..., 416. Each TFRC 402,... ,416 specifies at least a TBS, a number of channelisation codes, and a transmission power. In the tabulated transmission powers, power scaling values for a first and second mobile terminals have been taken into account which are assumed to be of equal magnitude. The TFRCs which specify the identical (TBS) form a set of TFRCs (also called a TBS group). Thus, the TFRCs 402,... 408 constitute a set of TFRCs, and the TFRCs 410,... 416 form another set of TFRCs.

In order to allocate TFRCs for a first and a second mobile terminal, the node-B, or more particularly the computer program product executed on the node-B (confer to fig. 1), selects a first set of TFRCs for the first mobile terminal from the TFRC table 400 such that it provides the maximum possible TBS by taking into account the radio resources provided by the node-B, the channel quality, and the capabilities of the first mobile terminal. In the following, it is assumed that the node-B is able to provide in total 6 channelisation codes and a total transmission power of 25 watts. The first set of TFRCs can for example be given by the TFRCs 402 to 408, which provides a TBS of 1,356 bits.

A first TFRC is then selected from the first set of TFRCs 402,... 408, and assigned to the first mobile station in the following way. The left-over number of channelisation codes for the TFRC 402 is 2 (6 codes provided by the node-B and 4 channelisation codes used by the TFRC 402). The left-over transmission power is 16 watts (25 watts minus 9 watts). Hence the product between the left-over transmission power and the left-over number of channelisation codes for the TFRC 402 is 32 watts. The left-over number of channelisation codes with respect to the TFRC 404 is 3, while the left-over transmission power is 15.6 watts. This yields a product of 46.8 watts. The left-over number of channelisation codes with respect to the TFRC 406 is 4, and the left-over transmission power is 14.4 watts. This yields a product of 57.6 watts. Accordingly, the left-over channelisation codes (5) and the left-over transmission power (11.3 watts) is determined for the TFRC 408 which yields a product of 56.5 watts. The TFRC 406 provides the largest product (57.6 watts) and hence the TFRC is allocated for the first mobile terminal.

Then, a second set of TFRCs is selected from the TFRC table 400 for the second mobile terminal such that it provides the maximum possible TBS by taking into account the radio resources provided by the node-B, the channel quality, and the capabilities of the second mobile terminal. In the following, it is assumed that the second set of TFRCs corresponds to the first set of TFRCs selected previously for the first mobile terminal. Thus, the second TFRC can be selected from the TFRCs 402, 404, 406, and 408 of the first set of TFRCs.

The TFRC 406 assigned to the first mobile terminal uses two channelisation codes and a transmission power of 10.6 watts. At most 4 channelisation codes are therefore left for the second mobile terminal (6 codes provided by the node-B minus 2 codes used by TFRC 406). Similarly, a transmission power of 14.4 watts (25 watts minus 10.6 watts) is available for the second mobile terminal. The left-over number of channelisation codes with respect to the TFRC 402 is then zero (4 codes from the base station minus 4 channelisation codes used by the TFRC 402) and the left-over transmission power is then 5.6 watts (14.6 watts minus 9 watts) which yields, taken as a product, the value of zero. The left-over number of channelisation codes for the TFRC 404 is 1 and the left-over transmission power is 5.2 watts which yields the product of 5.2 watts. The left-over number of channelisation codes with respect to the TFRC 406 is 2 and the left-over transmission power is 3.8 Watt. The product is therefore 7.6 Watts. The left-over number of channelisation codes with respect to the TFRC 408 is 3 and the left-over transmission power is 0.9 watts. This yields the product of 2.7 watts. Hence, the TFRC 406 is assigned to the second mobile terminal as the TFRC 406 maximises the product of left-over number of channelisation codes and left-over transmission power.

### List of Reference Numerals

- 100: UMTS network
- 102: Core network
- 104: UTRAN
- 106: Mobile terminal
- 108: Mobile terminal
- 110: Radio network controller
- 112: Node-B
- 114: Interface
- 116: Interface
- 118: Interface
- 120: Microprocessor
- 122: Storage device
- 124: Computer program product
- 126: TFRC table
- 128: Set of TFRCs
- 130: Set of TFRCs
- 132: Product
- 300: Graph
- 302: Abscissa
- 304: Ordinate
- 400: TFRC table
- 402: TFRC
- 404: TFRC
- 406: TFRC
- 408: TFRC
- 410: TFRC
- 412: TFRC
- 414: TFRC
- 416: TFRC

## Claims

1. A method of selecting Transport Format Resource Combinations for usage during a transmission time interval in a transmission channel, said transmission channel being used for downlink communication between a base station (112) and mobile terminals (106, 108), the method comprising:
- determining a first set of Transport Format Resource Combinations (128) from a given Transport Format Resource Combination table (126), each Transport Format Resource Combination of the set of Transport Format Resource Combinations specifying the same transport block size, a specific number of channelisation codes and a specific transmission power for the downlink communication with the first mobile terminal;
- selecting a first Transport Format Resource Combination from the first set of Transport Format Resource Combinations for the downlink communication with a first mobile terminal (106) in the transmission time interval such that a product (132) of the left-over number of channelisation codes and the left-over transmission power is maximal, the left-over number of channelisation codes being determined by the difference between the number of channelisation codes available for the first mobile terminal in the transmission time interval and the number of the channelisation codes specified by the first Transport Format Resource Combination, the left-over transmission power being determined by the difference between the transmission power available for the downlink communication with the first mobile terminal in the transmission time interval and the transmission power specified by the first Transport Format Resource Combination.

2. The method of claim 1, further comprising:
- determining a second set of Transport Format Resource Combinations (130) from the Transport Format Resource Combination table (126), each Transport Format Resource Combination of the second set of Transport Format Resource Combinations specifying the same transport block size, a specific number of channelisation codes and a specific transmission power for the downlink communication with the second mobile terminal;
- selecting a second Transport Format Resource Combination from the second set of Transport Format Resource Combinations for the downlink communication in the transmission time interval with a second mobile terminal (108) such that the product (132) of the left-over number of channelisation codes and the left-over transmission power is maximal, the left-over number of channelisation codes being determined by the difference between the number of channelisation codes available for the second mobile terminal in the transmission time interval and the number of the channelisation codes specified by the second Transport Format Resource Combination, the left-over transmission power being determined by the difference between the transmission power available for the second mobile terminal in the transmission time interval and the transmission power specified by the second Transport Format Resource Combination.

3. The method of claim 2, further comprising:
- determining if the transmission channel is to be shared between at least the first mobile terminal (106) and the second mobile terminal (108);
- selecting for the first mobile terminal the Transport Format Resource Combination from the first set of Transport Format Resource Combinations which specifies the lowest transmission power, if the transmission channel is only to be scheduled for the first mobile terminal.

4. The method of claim 3, wherein a left-over transmission power takes into account a transmission power of a control channel of a mobile terminal for which the Transport Format Resource Combination is selected subsequent to the determination of the product by use of the left-over transmission power, wherein the control channel is associated with the transmission channel.

5. The method of claim 1, wherein the transmission channel is only to be scheduled for the first mobile terminal, if the first mobile terminal is the only mobile terminal served in a cell by the base station, or if the first mobile terminal served in the cell by the base station is the only mobile terminal with non-zero buffer filling, or if the determined first set of Transport Format Resource Combinations provides only sufficient radio resources to serve the first mobile terminal during the transmission time interval.

6. The method of claim 1, wherein the first set of Transport Format Resource Combinations (402,...,408) is determined from the table of Transport Format Resource Combinations (400) such that the Transport Format Resource Combinations of the first set of Transport Format Resource Combinations specifies a transfer block size which is the largest possible transfer block size for the first mobile terminal, and wherein the second set of Transport Format Resource Combinations is determined from the table of Transport Format Resource Combinations (400) such that the Transport Format Resource Combinations of the second set of Transport Format Resource Combinations specifies a transfer block size which is the largest possible transfer block size for the second mobile terminal.

7. The method of claim 3, wherein the transmission channel and the control channel are in accordance with the High-Speed Downlink Packet Access protocol, wherein the transmission channel is a High-Speed Downlink Shared Channel, and wherein the control channel is a High-Speed Shared Control Channel.

8. A computer program product comprising computer executable instructions, said instruction being adapted to perform the method in accordance with any one of the claims 1 to 7.

9. A telecommunications network (100) comprising:
- a base station (104) supporting a downlink transmission channel for downlink communication with a first mobile terminal (106, 108);
the telecommunications network being **characterized by**:
- means for determining per transmission time interval of the transmission channel a first set of Transport Format Resource Combinations (128) for the first mobile terminal by use of a given Transport Format Resource Combination table (126), each Transport Format Resource Combination of the first set of Transport Format Resource Combinations specifying the same transport block size, a specific number of channelisation codes, and a specific transmission power;
- means for selecting a first Transport Format Resource Combination from the first set of Transport Format Resource Combinations for the downlink communication with the first mobile terminal (106) in the transmission time interval such that a product (132) of the left-over number of channelisation codes and the left-over transmission power is maximal, the left-over number of channelisation codes being determinable by the difference between the number of channelisation codes available for the first mobile terminal in the transmission time interval and the number of the channelisation codes specified by the first Transport Format Resource Combination, the left-over transmission power being determinable by the difference between the transmission power available for the downlink communication with the first mobile terminal in the transmission time interval and the transmission power specified by the first Transport Format Resource Combination.

10. A base station (112) comprising:
- means for establishing a downlink transmission channel for downlink communication with a first mobile terminal (106);
the base station being **characterized by**:
- means for determining per transmission time interval of the transmission channel a first set of Transport Format Resource Combinations (128) for the first mobile terminal by use of a given Transport Format Resource Combination table (126), each Transport Format Resource Combination of the first set of Transport Format Resource Combinations specifying the same transport block size, a specific number of channelisation codes, and a specific transmission power;
- means for selecting a first Transport Format Resource Combination from the first set of Transport Format Resource Combinations for the downlink communication with a first mobile terminal (106) in the transmission time interval such that a product (132) of the left-over number of channelisation codes and the left-over transmission power is maximal, the left-over number of channelisation codes being determinable by the difference between the number of channelisation codes available for the first mobile terminal in the transmission time interval and the number of the channelisation codes specified by the first Transport Format Resource Combination, the left-over transmission power being determinable by the difference between the transmission power available for the downlink communication with the first mobile terminal in the transmission time interval and the transmission power specified by the first Transport Format Resource Combination.

## Patentansprüche

1. Ein Verfahren zur Auswahl von Transportformat-Ressourcenkombinationen für die Verwendung während eines Übertragungszeitintervalls in einem Übertragungskanal, wobei der besagte Übertragungskanal für die Downlink-Verbindung zwischen einer Basisstation (112) und Mobilendgeräten (106, 108) eingesetzt wird, wobei das Verfahren umfasst:
- Bestimmen eines ersten Satzes von Transportformat-Ressourcenkombinatlonen (128) aus einer gegebenen Transportformat-Ressourcenkombinationstabelle (126), wobei jede Transportformat-Ressourcenkombination des Satzes von Transportformat-Ressourcenkombinationen dieselbe Transportblockgröße, eine bestimmte Anzahl von Spreizcodes und eine bestimmte Übertragungsleistung für die Downlink-Verbindung mit dem ersten Mobilendgerät spezifiziert;
- Auswählen einer ersten Transportformat-Ressourcenkombination aus dem ersten Satz von Transportformat-Ressourcenkombinationen für die Downlink-Verbindung mit einem ersten Mobilendgerät (106) im Übertragungszeitintervall, so dass ein Produkt (132) der übrig bleibenden Anzahl von Spreizcodes und der übrig bleibenden Übartragungsleistung maximal ist, wobei die übrig bleibende Anzahl von Spreizcodes durch die Differenz zwischen der Anzahl der für das erste Mobilendgerät in dem Übertragungszeitintervall verfügbaren Spreizcodes und der von der ersten Transportformat-Ressourcenkombination spezifizierten Anzahl von Spreizcodes bestimmt wird, und die übrig bleibende Übertragungsleistung durch die Differenz zwischen der für die Downlink-Verbindung mit dem ersten Mobilendgerät in dem Übertragungszeitintervall verfügbaren Übertragungsleistung und der von der ersten Transporlformat-Ressourcenkombination spezifizierten Übertragungsleistung bestimmt wird.

2. Das Verfahren nach Anspruch 1, weiterhin umfassend:
- Bestimmen eines zweiten Satzes von Transportformat-Ressourcenkombinationen (130) aus der Transportformat-Ressourcenkombinationstabelle (126), wobei jede Transportformat-Ressourcenkombination des zweiten Satzes von Transportformat-Ressourcenkombinationen dieselbe Transportblockgröße, eine bestimmte Anzahl von Spreizcodes und eine bestimmte Übertragungsleistung für die Downlink-Verbindung mit dem zweiten Mobilendgerät spezifiziert;
- Auswählen einer zweiten Transportformat-Ressourcenkombination aus dem zweiten Satz von Transportformat-Ressourcenkombinationen für die Downlink-Verblndung mit einem zweiten Mobilendgerät (108) im Übertragungszeitintervall, so dass ein Produkt (132) der übrig bleibenden Anzahl von Spreizcodes und der übrig bleibenden Übertragungsleistung maximal ist, wobei die übrig bleibende Anzahl von Spreizcodes durch die Differenz zwischen der Anzahl der für das zweite Mobilendgerät in dem Übertragungszeitintervall verfügbaren Spreizcodes und der von der zweiten Transportformat-Ressourcenkombination spezifizierten Anzahl von Spreizcodes bestimmt wird, und die übrig bleibende Übertragungsleistung durch die Differenz zwischen der für das zweite Mobilendgerät in dem Übertragungszeitintervall verfügbaren Übertragungsleistung und der von der zweiten Transportformat-Ressourcenkombination spezifizierten Übertragungsleistung bestimmt wird.

3. Das Verfahren nach Anspruch 2, weiterhin umfassend:
- Bestimmen, ob der Übertragungskanal zwischen mindestens dem ersten Mobilendgerät (106) und dem zweiten Mobilendgerät (108) geteilt werden soll;
- Auswählen, für das erste Mobilendgerät, der Transportformat-Ressourcenkombination aus dem ersten Satz von Transportformat-Ressourcenkombinationen, welche die niedrigste Übertragungsleistung spezifiziert, wenn der Übertragungskanal nur für das erste Mobilendgerät geplant werden soll.

4. Das Verfahren nach Anspruch 3, wobei eine übrig bleibende Übertragungsleistung eine übrig bleibende Übertragungsleistung eines Steuerkanals eines Mobilendgeräts, für welchen die Transportformat-Ressourcenkombination im Anschluss an die Bestimmung des Produktes unter Verwendung der übrig bleibenden Übertragungsleistung ausgewählt wird, berücksichtigt, wobei der Steuerkanal mit dem Übertragungskanal verbunden ist.

5. Das Verfahren nach Anspruch 1, wobei der Übertragungskanal nur für das erste Mobilendgerät geplant werden soll, wenn das erste Mobilendgerät das einzige Mobilendgerät ist, welches in der Zelle von der Basisstation bedient wird, oder wenn das erste Mobilendgerät, welches in der Zelle von der Basisstation bedient wird, das einzige Mobilendgerät mit Nicht-Null-Pufferfüllung ist, oder wenn der bestimmte erste Satz von Transportformat-Ressourcenkombinationen nur ausreichende Funkressourcen bereitstellt, um das erste Mobilendgerät während des Übertragungszeitintervalls zu bedienen.

6. Das Verfahren nach Anspruch 1, wobei der erste Satz von Transportformat-Ressourcenkombinationen (402, ..., 408) aus der Tabelle der Transportformat-Ressourcenkombinationen (400) bestimmt wird, so dass die Transportformat-Ressourcenkombination des ersten Satzes von Transportformat-Ressourcenkombinationen eine Übertragungsblockgröße spezifiziert, welche die größte mögliche Übertragungsblockgröße für das erste Mobilendgerät ist, und wobei der zweite Satz von Transportformat-Ressourcenkombinationen aus der Tabelle der Transportformat-Ressourcenkombinationen (400) bestimmt wird, so dass die Transportformat-Ressourcenkombination des zweiten Satzes von Transporlformat-Ressourcenkombinationen eine Übertragungsblockgröße spezifiziert, welche die größte mögliche Übertragungsblockgröße für das zweite Mobilendgerät Ist.

7. Das Verfahren nach Anspruch 3, wobei der Übertragungskanal und der Steuerkanal dem High-Speed-Downlink Packet Access-Protokoll entsprechen, wobei der Übertragungskanal ein High-Speed Downlink Shared Channel ist, und wobei der Steuerkanal ein High-Speed Shared Control Channel ist.

8. Ein Computer-Programmprodukt, welches computerausführbare Instruktionen umfasst, wobei die besagten Instruktionen fähig sind, das Verfahren gemäß einem der Ansprüche 1 bis 7 auszuführen.

9. Ein Telekommunikationsnetzwerk (100), umfassend:
- Eine Basisstation (104), welche einen Downlink-Übertragungskanal für die Downlink-Verbindung mit einem ersten Mobilendgerät (106, 108) unterstützt;
wobei das Telekommunikationsnetzwerk **gekennzeichnet ist durch**:
- Mittel zum Bestimmen, pro Übertragungszeitintervall des Übertragungskanals, eines ersten Satzes von Transportformat-Ressourcenkombinationen (128) für das erste Mobilendgerät unter Verwendung einer gegebenen Transportformat-Ressourcenkomblnationstabelle (126), wobei jede Transportformat-Ressourcenkombination des ersten Satzes von Transportformat-Ressourcenkombinationen dieselbe Transportblockgröße, eine bestimmte Anzahl von Spreizcodes und eine bestimmte Übertragungsleistung spezifiziert;
- Mittel zum Auswählen einer ersten Transportformat-Ressourcenkombination aus dem ersten Satz von Transportformat-Ressourcenkombinationen für die Downlink-Verbindung mit dem ersten Mobilendgerät (106) im Übertragungszeitintervall, so dass ein Produkt (132) der übrig bleibenden Anzahl von Spreizcodes und der übrig bleibenden Übertragungsleistung maximal ist, wobei die übrig bleibende Anzahl von Spreizcodes **durch** die Differenz zwischen der Anzahl der für das erste Mobilendgerät in dem Übertragungszeitintervall verfügbaren Spreizcodes und der von der ersten Transportformat-Ressourcenkombination spezifizierten Anzahl der Spreizcodes bestimmbar ist, und die übrig bleibende Übertragungsleistung **durch** die Differenz zwischen der für die Downlink-Verbindung mit dem ersten Mobilendgerät in dem Übertragungszeitintervall verfügbaren Übertragungsleistung und der von der ersten Transportformat-Ressourcenkombination spezifizierten Übertragungsleistung bestimmbar ist.

10. Eine Basisstation (112), umfassend:
- Mittel zum Herstellen eines Downlink-Übertragungskanals für die Downlink-Verbindung mit einem ersten Mobilendgerät (106);
wobei die Basisstation **gekennzeichnet ist durch**:
- Mittel zum Bestimmen, pro Übertragungszeitintervall des Übertragungskanals, eines ersten Satzes von Transportformat-Ressourcenkombinationen (128) für das erste Mobilendgerät unter Verwendung einer gegebenen Transportformat-Ressourcenkombinationstabelle (126), wobei jede Transportformat-Ressourcenkombination des ersten Satzes von Transportformat-Ressourcenkombinationen dieselbe Transportblockgröße, eine bestimmte Anzahl von Spreizcodes und eine bestimmte Übertragungsleistung spezifiziert;
- Mittel zum Auswählen einer ersten Transportformat-Ressourcenkombination aus dem ersten Satz von Transportformat-Ressourcenkombinationen für die Downlink-Verbindung mit dem ersten Mobilendgerät (106) Im Übertragungszeitintervall, so dass ein Produkt (132) der übrig bleibenden Anzahl von Spreizcodes und der übrig bleibenden Übertragungsleistung maximal ist, wobei die übrig bleibende Anzahl von Spreizcodes **durch** die Differenz zwischen der Anzahl der für das erste Mobilendgerät In dem Übertragungszeitintervall verfügbaren Spreizcodes und der von der ersten Transportformat-Ressourcenkombination spezifizierten Anzahl der Spreizcodes bestimmbar ist, und die übrig bleibende Übertragungsleistung **durch** die Differenz zwischen der für die Downlink-Verbindung mit dem ersten Mobilendgerät in dem Übertragungszeitintervall verfügbaren Übertragungslaistung und der von der ersten Transportformat-Ressourcenkombination spezifizierten Übertragungsleistung bestimmbar ist.

## Revendications

1. Procédé de sélection de combinaisons de ressources à format de transport (TFRC) pour une utilisation durant un intervalle de temps de transmission dans un canal de transmission, ledit canal de transmission étant utilisé pour une communication descendante entre une station de base (112) et des terminaux mobiles (106, 108), le procédé comprenant :
- déterminer un premier ensemble de combinaisons de ressources à format de transport (128) à partir d'un tableau (126) donné de combinaisons de ressources à format de transport, chaque combinaison de ressources à format de transport de l'ensemble de combinaisons de ressources à format de transport spécifiant la même taille de bloc de transport, un nombre spécifique de codes de canalisation et une puissance de transmission spécifique pour la communication descendante avec le premier terminal mobile ;
- sélectionner une première combinaison de ressources à format de transport à partir du premier ensemble de combinaisons de ressources à format de transport pour la communication descendante avec un premier terminal mobile (106) dans l'intervalle de temps de transmission de sorte qu'un produit (132) du nombre restant de codes de canalisation et de la puissance de transmission restante soit maximal, le nombre restant de codes de canalisation étant déterminé par la différence entre le nombre de codes de canalisation disponibles pour le premier terminal mobile dans l'intervalle de temps de transmission et le nombre des codes de canalisation spécifiés par la première combinaison de ressources à format de transport, la puissance de transmission restante étant déterminée par la différence entre la puissance de transmission disponible pour la communication descendante avec le premier terminal mobile dans l'intervalle de temps de transmission et la puissance de transmission spécifiée par la première combinaison de ressources à format de transport.

2. Procédé selon la revendication 1, comprenant en outre :
- déterminer un deuxième ensemble de combinaisons de ressources à format de transport (130) à partir du tableau (126) de combinaisons de ressources à format de transport, chaque combinaison de ressources à format de transport du deuxième ensemble de combinaisons de ressources à format de transport spécifiant la même taille de bloc de transport, un nombre spécifique de codes de canalisation et une puissance de transmission spécifique pour la communication descendante avec le deuxième terminal mobile ;
- sélectionner une deuxième combinaison de ressources à format de transport à partir du deuxième ensemble de combinaisons de ressources à format de transport pour la communication descendante dans l'intervalle de temps de transmission avec un deuxième terminal mobile (108) de sorte que le produit (132) du nombre restant de codes de canalisation et de la puissance de transmission restante soit maximal, le nombre restant de codes de canalisation étant déterminé par la différence entre le nombre de codes de canalisation disponibles pour le deuxième terminal mobile dans l'intervalle de temps de transmission et le nombre des codes de canalisation spécifiés par la deuxième combinaison de ressources à format de transport, la puissance de transmission restante étant déterminée par la différence entre la puissance de transmission disponible pour le deuxième terminal mobile dans l'Intervalle de temps de transmission et la puissance de transmission spécifiée par la deuxième combinaison de ressources à format de transport.

3. Procédé selon la revendication 2, comprenant en outre :
- déterminer si le canal de transmission doit être partagé au moins entre le premier terminal mobile (106) et le deuxième terminal mobile (108) ;
- sélectionner, pour le premier terminal mobile, la combinaison de ressources à format de transport à partir du premier ensemble de combinaisons de ressources à format de transport qui spécifie la puissance de transmission la plus faible, si le canal de transmission ne doit être planifié que pour le premier terminal mobile.

4. Procédé selon la revendication 3, dans lequel une puissance de transmission restante prend en compte une puissance de transmission d'un canal de commande d'un terminal mobile pour lequel la combinaison de ressources à format de transport est sélectionnée suite à la détermination du produit en utilisant la puissance de transmission restante, dans lequel le canal de commande est associé au canal de transmission.

5. Procédé selon la revendication 1, dans lequel le canal de transmission ne doit être planifié que pour le premier terminal mobile, si le premier terminal mobile est le seul terminal mobile desservi dans une cellule par la station de base, ou si le premier terminal mobile desservi dans la cellule par la station de base est le seul terminal mobile avec remplissage du tampon non nul, ou si le premier ensemble déterminé de combinaisons de ressources à format de transport ne fournit que des ressources radio suffisantes pour desservir le premier terminal mobile durant l'Intervalle de temps de transmission.

6. Procédé selon la revendication 1, dans lequel le premier ensemble de combinaisons de ressources à format de transport (402,...,408) est déterminé à partir du tableau de combinaisons de ressources à format de transport (400) de sorte que les combinaisons de ressources à format de transport du premier ensemble de combinaisons de ressources à format de transport spécifient une taille de bloc de transfert qui est la taille de bloc de transfert la plus grande possible pour le premier terminal mobile, et dans lequel le deuxième ensemble de combinaisons de ressources à format de transport est déterminé à partir du tableau de combinaisons de ressources à format de transport (400) de sorte que les combinaisons de ressources à format de transport du deuxième ensemble de combinaisons de ressources à format de transport spécifient une taille de bloc de transfert qui est la taille de bloc de transfert la plus grande possible pour le deuxième terminal mobile.

7. Procédé selon la revendication 3, dans lequel le canal de transmission et le canal de commande sont conformes au protocole d'accès par paquets en liaison descendante haut débit, dans lequel le canal de transmission est un canal partagé en liaison descendante haut débit, et dans lequel le canal de commande est un canal de commande partagé haut débit.

8. Produit de programme informatique comprenant des instructions exécutables par un ordinateur, ladite instruction étant adaptée pour exécuter le procédé selon l'une quelconque des revendications 1 à 7.

9. Réseau de télécommunications (100) comprenant :
- station de base (104) prenant en charge un canal de transmission descendant pour la communication descendante avec un premier terminal mobile (106, 108) ; le réseau de télécommunications étant **caractérisé par** :
- moyens pour déterminer, par intervalle de temps de transmission du canal de transmission, un premier ensemble de combinaisons de ressources à format de transport (128) pour le premier terminal mobile en utilisant un tableau (126) donné de combinaisons de ressources à format de transport, chaque combinaison de ressources à format de transport du premier ensemble de combinaisons de ressources à format de transport spécifiant la même taille de bloc de transport, un nombre spécifique de codes de canalisation et une puissance de transmission spécifique ;
- moyens pour sélectionner une première combinaison de ressources à format de transport à partir du premier ensemble de combinaisons de ressources à format de transport pour la communication descendante avec le premier terminal mobile (106) dans l'intervalle de temps de transmission de sorte qu'un produit (132) du nombre restant de codes de canalisation et de la puissance de transmission restante soit maximal, le nombre restant de codes de canalisation pouvant être déterminé par la différence entre le nombre de codes de canalisation disponibles pour le premier terminal mobile dans l'intervalle de temps de transmission et le nombre de codes de canalisation spécifiés par la première combinaison de ressources à format de transport, la puissance de transmission restante pouvant être déterminée par la différence entre la puissance de transmission disponible pour la communication descendante avec le premier terminal mobile dans l'intervalle de temps de transmission et la puissance de transmission spécifiée par la première combinaison de ressources à format de transport.

10. Station de base (112) comprenant :
- moyens pour établir un canal de transmission descendant pour la communication descendante avec un premier terminal mobile (106) ;
la station de base étant **caractérisée par** :
- moyens pour déterminer, par intervalle de temps de transmission du canal de transmission, un premier ensemble de combinaisons de ressources à format de transport (128) pour le premier terminal mobile en utilisant un tableau (126) donné de combinaisons de ressources à format de transport , chaque combinaison de ressources à format de transport du premier ensemble de combinaisons de ressources à format de transport spécifiant la même taille de bloc de transport, un nombre spécifique de codes de canalisation et une puissance de transmission spécifique ;
- moyens pour sélectionner une première combinaison de ressources à format de transport à partir du premier ensemble de combinaisons de ressources à format de transport pour la communication descendante avec un premier terminal mobile (106) dans l'intervalle de temps de transmission de sorte qu'un produit (132) du nombre restant de codes de canalisation et de la puissance de transmission restante soit maximal, le nombre restant de codes de canalisation pouvant être déterminé par la différence entre le nombre de codes de canalisation disponibles pour le premier terminal mobile dans l'intervalle de temps de transmission et le nombre des codes de canalisation spécifiés par la première combinaison de ressources à format de transport, la puissance de transmission restante pouvant être déterminée par la différence entre la puissance de transmission disponible pour la communication descendante avec le premier terminal mobile dans l'intervalle de temps de transmission et la puissance de transmission spécifiée par la première combinaison de ressources à format de transport.
